# DEMANDE DE BREVET EUROPEEN

(11) **EP 1 806 284 A1**
(43) Date de publication de la demande: **11.07.2007**
(21) Numéro de dépôt: 07300704.9
(22) Date de dépôt: 08.01.2007
(51) Int. Cl.: B63J 3/02, F02B 61/04, H02K 7/00

(54) **Dispositif de génération de courant et/ou de motorisation électrique a bord d'une structure navigante**

(30) Priorité: 10.01.2006 FR 0600359
(71) Demandeur: Nanni Industries, 33260 La Teste de Buch (FR)
(72) Inventeur: Luca, Philippe, 33260, La Teste de Buch (FR)
(74) Mandataire: Fantin, Laurent

(57) **Abrégé**

L'objet de l'invention est un dispositif (26) de génération de courant électrique et/ou de motorisation dans une structure navigante, interposé entre un bloc moteur comprenant un arbre menant (28) monté sur un palier P1 et un bloc (20) réducteur/inverseur comprenant un arbre mené (38) monté sur un palier P2, caractérisé en ce que ce dispositif (26) de génération comprend un carter (40) lié au bloc moteur, un stator S solidaire de ce carter et un rotor R lié à l'arbre menant (28), monté sur un palier P3 ménagé dans ledit carter.

## Description

La présente invention concerne un dispositif de génération de courant électrique et/ou de motorisation électrique dans une structure navigante.

Dans la navigation, et plus particulièrement dans la navigation de plaisance, les équipements sont de plus en plus nombreux et sophistiqués. Électronique de bord, cuisine équipée avec four micro-ondes, télévision, eau sous pression et autres équipements de ponts fonctionnant à l'électricité.

En effet, pour la plupart des unités navigantes de plaisance, le confort est un critère essentiel de choix.

La présente invention concerne des unités d'une gamme de jauge limitée, n'ayant pas de groupes électrogènes indépendants et disposant d'un moteur "inboard".

On distingue les structures navigantes à moteur et les structures navigantes à voiles et équipées d'une motorisation.

Dans les deux cas, le moteur est équipé d'au moins un alternateur permettant la charge d'un parc batteries moteur. Ce parc batteries moteur est utilisé pour les fonctions moteur et notamment le démarrage.

Par contre, il est rarement dimensionné pour les services et le confort.

De plus, dans le cas d'un parc unique il se pose un premier problème lorsque le parc batteries moteur a été fortement sollicité. En effet, lors de la mise en service du moteur, le ou les alternateurs subissent un très fort appel de courant pour lequel ils ne sont pas dimensionnés. Ceci provoque régulièrement la mise hors service de ces moyens de charge donc la mise hors service de la motorisation.

Comme le moteur est essentiel pour une structure navigante à moteur et pour le moins est un organe de sécurité pour les structures navigantes à voiles, il apparaît nécessaire de pouvoir séparer le parc batteries en un parc batteries moteur et un parc batteries services.

Le premier est généralement composé d'une ou de deux batteries de fort ampérage associées à un alternateur ceci pour chaque moteur s'il y a plusieurs moteurs.

Le second est généralement composé d'un plus grand nombre de batteries, éventuellement de types et voltages différents, pour disposer d'une forte capacité d'accumulation d'énergie électrique. Il convient alors de pouvoir recharger ces batteries.

Dans les propulsions marines, on trouve systématiquement pour un ensemble de motorisation : un moteur, une transmission et une hélice ou une turbine.

Les transmissions sont de différents types et sont constituées généralement d'un réducteur, éventuellement d'un inverseur, avec un entraînement de l'hélice par ligne d'arbre directe ou par embase du type Sail-drive ou Z-drive.

Ainsi, le moteur dispose d'une sortie d'arbre moteur muni d'un volant d'inertie, cet ensemble étant disposé dans une cloche normalisée de façon à recevoir les différents types de transmission suivant les différents fournisseurs.

L'accouplement entre l'arbre moteur équipé de son volant d'inertie et l'arbre de la transmission est du type élastique connu sous la dénomination "flector".

Ceci permet d'absorber les dilatations, les tolérances d'alignement, les vibrations.

Afin de pouvoir répondre aux besoins de génération d'énergie électrique, une solution consiste à interposer un générateur fortement dimensionné entre le moteur et la transmission.

Ceci présente l'avantage de ne pas induire de modifications de conception de la structure navigante, tout au plus un décalage de la position des supports du moteur de l'ordre de 15 à 30 cm pour donner un ordre de grandeur.

On constate que cette modification est mineure sur les constructions neuves et peut être aisément réalisée sur les structures navigantes existantes.

En diamètre, il ne se pose aucun problème d'encombrement dans cette zone.

L'art antérieur propose ainsi dans la demande de brevet WO 2005/032935 ou EP 1 669 287 un générateur interposé entre le moteur et la transmission.

De très nombreuses variantes prévoient des carters spécifiques rapportés sur le bloc moteur, voire des volants spécifiques, ce qui nécessite des modifications importantes sur les ensembles existants et sur les nouveaux ensembles moteur qui sont modifiés suivant qu'ils reçoivent ou non un générateur.

Quel que soit l'agencement retenu, il se pose un problème de fonctionnement.

En effet, le volant est porté par l'arbre menant donc guidé par un palier monté sur le bloc moteur. Les rotors sont liés à ce volant et représentent une masse importante, 10 à 15 kg pour donner un ordre de grandeur, en déport. Les stators sont solidaires du carter du générateur, ce carter étant lié à la cloche de sortie moteur, et sont disposés au droit des rotors avec un entrefer de quelques dixièmes de millimètres.

De l'autre côté*,* l'accouplement élastique permet l'entraînement *de* l'arbre mené qui est lui-même porté par un palier monté sur le bloc réducteur.

On constate que les rotors peuvent subir une rotation avec une déformation légèrement en tonneau due à une flexion entre les deux paliers.

Cette rotation en tonneau est difficilement compatible avec l'entrefer rotor/stator de quelques dixièmes de millimètres.

Un problème important est donc le guidage intermédiaire.

Les autres problèmes que visent à résoudre l'invention sont :
- la fiabilité, essentielle en mer,
- le nombre réduit de pièces, ce qui renforce cette fiabilité et limite les coûts,
- l'adaptabilité sur l'existant normalisé, moteur et transmission, en limitant les modifications,
- l'amélioration des rendements de production d'électricité par réduction de la valeur de l'entrefer et maintien précis de cette valeur,
- l'amélioration des rendements de production d'électricité en augmentant les masses rotor/stator,
- facilité de montage/démontage du générateur, et
- facilité de démontage du rotor.

Ainsi qu'indiqué, le générateur selon l'invention permet de charger un parc de batteries services mais il peut aussi être utilisé comme moteur électrique et c'est aussi ce que propose la présente invention. Dans ce cas pour des manoeuvres de durée limitée et ne nécessitant que peu de puissance, il est possible d'utiliser le même générateur en fonctionnement moteur moyennant la désolidarisation de l'entraînement moteur.

Un exemple concret concerne la manoeuvre d'un bateau fluvial durant l'attente puis durant le passage d'écluses.

De fait, si le moteur est désolidarisé en entraînement, le générateur peut aussi être utilisé comme hydro générateur lorsque la structure navigante est mue par un autre moyen, typiquement un voilier durant une croisière.

Ainsi, le générateur selon la présente invention permet une certaine universalité au montage et dans les applications.

L'invention est maintenant décrite en détail, selon un mode de réalisation particulier, non limitatif, et une variante, les dessins annexés permettant une illustration du mode principal.

Les figures des dessins représentent :
- figure 1 : une vue schématique d'implantation du générateur selon l'invention à la poupe d'un voilier, avec une ligne d'arbre,
- figure 2 : une vue plus détaillée du positionnement du générateur de la figure 1,
- figure 3 : une vue en coupe du générateur monté, et
- figure 4 : une vue du démontage du rotor.

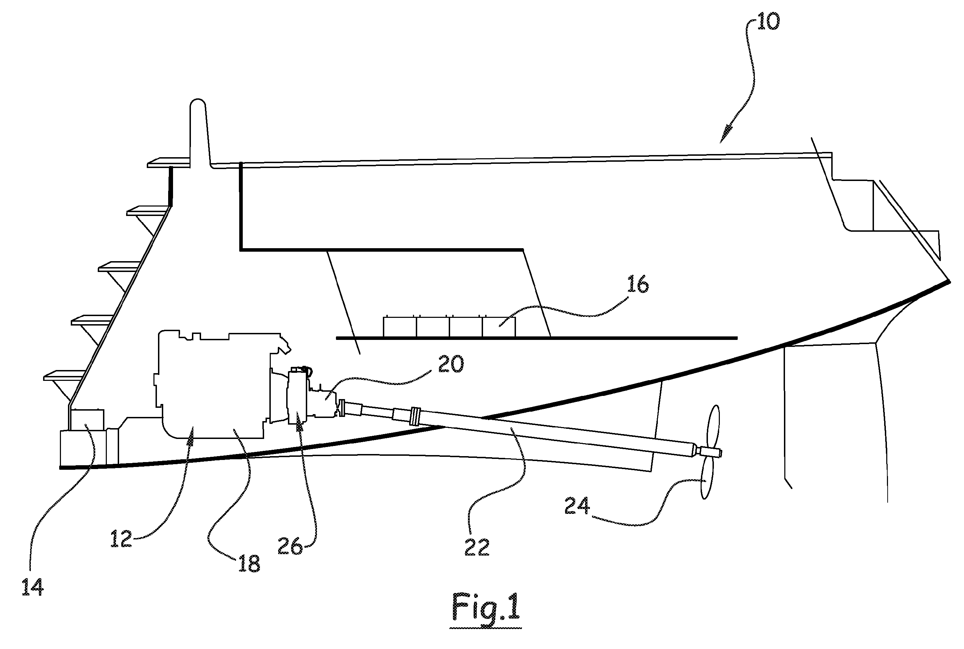

Sur la figure 1, on a représenté une structure navigante 10, en l'occurrence un voilier, avec une motorisation 12, un parc batteries moteur 14 et un parc batteries services 16.

La motorisation 12 comprend un moteur 18, un ensemble 20 réducteur/inverseur, une ligne d'arbre 22 équipée d'une hélice 24 à son extrémité. Un tel montage est extrêmement bien connu.

Le parc batteries moteur 14 est rechargé directement par l'alternateur du moteur, non représenté, et ceci également de façon connue.

Le dispositif de génération de courant selon l' invention, référencé 26 de façon *générale, est interposé entre le moteur 18 et* l'ensemble 20 réducteur/inverseur, le moteur 18 et l'ensemble 20 étant eux-mêmes solidarisés aux supports prévus à cet effet dans la coque de la structure navigante.

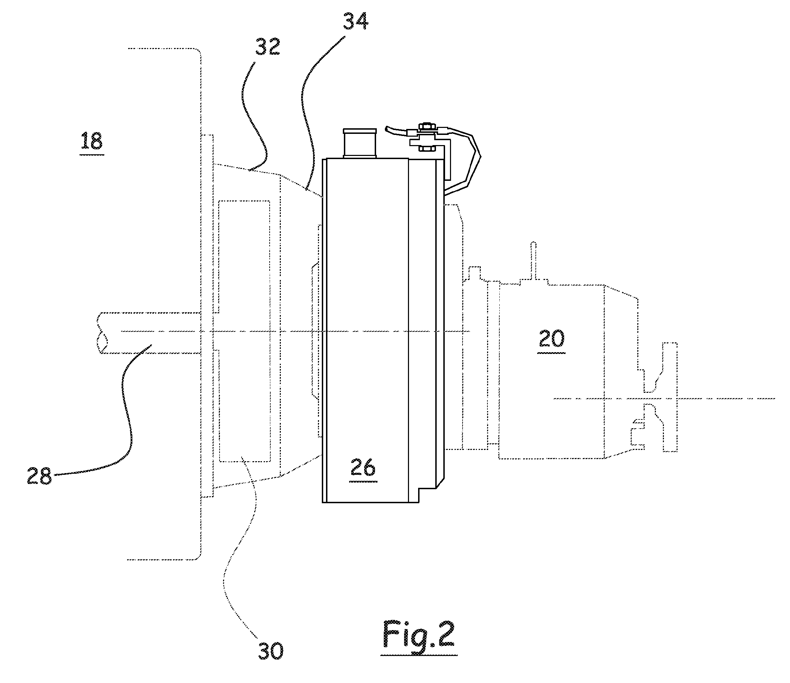

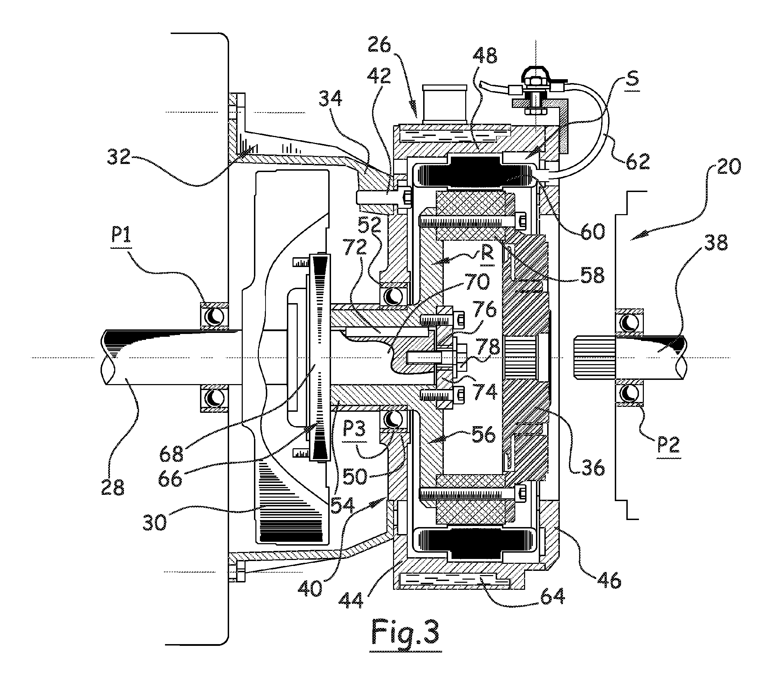

Comme indiqué sur les figures 2 et 3, les fabricants de moteur fournissent des blocs moteur avec un arbre 28 menant portant un volant 30, ce volant étant placé dans une cloche 32 rapportée sur le bloc moteur et disposant d'une bride 34, le tout étant normalisé.

En se reportant sur la figure 3 plus spécifiquement, il est prévu une liaison élastique 36 dite flector afin de recevoir l'arbre mené 38 de l'ensemble 20 réducteur/inverseur, également normalisée.

Le dispositif de génération 26 s'interpose directement entre ces arbres 28 menant et 38 mené de l'ensemble 20 réducteur/inverseur moyennant un décalage longitudinal ménagé entre les deux organes, généralement un déplacement du moteur 18 vers l'avant de la structure navigante, 150 à 200 mm pour donner un ordre de grandeur.

Sur cette figure 3, on note que l'arbre menant 28 est parfaitement guidé par un palier P1 et que l'arbre mené 38 est parfaitement guidé par un palier P2.

Le dispositif de génération 26 de courant électrique comprend un carter 40 rapporté sur la bride 34, normalisée, de la cloche 32 au moyen de vis 42.

Ce carter 40 comprend un flasque 44 avant et un flasque 46 arrière, les deux étant reliés par une entretoise 48 annulaire. Le découpage schématique ainsi effectué permet une lecture plus aisée mais ces éléments de carter peuvent avantageusement venir directement de moulage.

Le flasque 44 avant comprend en son centre une portée 50 destinée à recevoir un palier P3, en l'occurrence la cage extérieure d'un roulement 52.

La cage intérieure de ce roulement 52 reçoit un moyeu composé d'un arbre 54 creux et d'un disque 56. Ce disque 56 porte des pièces magnétiques 58 et constitue le rotor R. Les pièces magnétiques 58 du rotor sont destinées à coopérer avec des enroulements 60 formant un stator S et portées par l'entretoise annulaire 48.

Entre les pièces magnétiques 58 du rotor R et les enroulements 60 du stator S, il est prévu un entrefer e de quelques dixièmes de millimètres, non représenté à l'échelle du dessin.

Le courant électrique produit est collecté et conduit par des câbles 62 adaptés vers le parc batteries services 16 moyennant l'interposition des moyens de régulation, de contrôle et de sécurité adaptés.

Le rotor R est prévu pour recevoir la liaison élastique 36 dite flector.

Cette liaison élastique 36 est celle qui est prévue pour coopérer avec le volant 30 lorsqu'il n'y a pas de dispositif de génération 26 interposé, cette liaison est conservée.

De façon connue, le flector comprend un insert central métallique destiné à recevoir l'extrémité de l'arbre mené 38, l'accouplement étant du type à cannelures.

Afin d'évacuer les calories produites lors du fonctionnement, un circuit 64 de refroidissement est ménagé, dans le cas représenté, au sein de l'entretoise annulaire 48.

Le dispositif de génération 26 est complété par une pièce de liaison 66. Cette pièce comprend un disque 68 destiné à être rapporté par vissage sur des taraudages standards portés par le volant 30 et un axe 70 plein, prévu pour recevoir extérieurement l'arbre creux 54 du moyeu du rotor R. Une clavette 72 assure la liaison en rotation de l'axe plein et de l'arbre creux.

Une platine 74 est rapportée sur le disque 56 par vissage, ladite platine 74 comprenant un trou central 76 taraudé.

Ainsi une vis 78 centrale passe librement dans ce trou central 76 taraudé et est vissée dans un taraudage de plus petit diamètre ménagé dans l'axe 70 plein.

Cette vis 78 évite uniquement le retrait du rotor de l'axe 70 plein puisque l'entraînement en rotation est assuré par la clavette 72.

Ainsi que représenté sur la figure 3, on constate que le rotor R est parfaitement guidé en rotation par le palier P3 mais aussi par le palier P1 à travers le volant 30 et la pièce de liaison 66 qui en est solidaire.

*L' entrefer e est nécessairement respecté du fait que le stator* S *est porté par* le carter 40 solidaire de la cloche 32, elle-même solidaire du bloc moteur portant le palier P1.

Cet agencement permet un montage du dispositif 26 de génération directement sur la cloche et le volant moteur de l'arbre menant qui sont des éléments standards, sans aucune modification.

De même, le flector standard dans lequel pénètre l'arbre cannelé mené est conservé, ce flector étant maintenant rapporté sur le rotor R au lieu d'être rapporté sur le volant 30 de l'arbre menant.

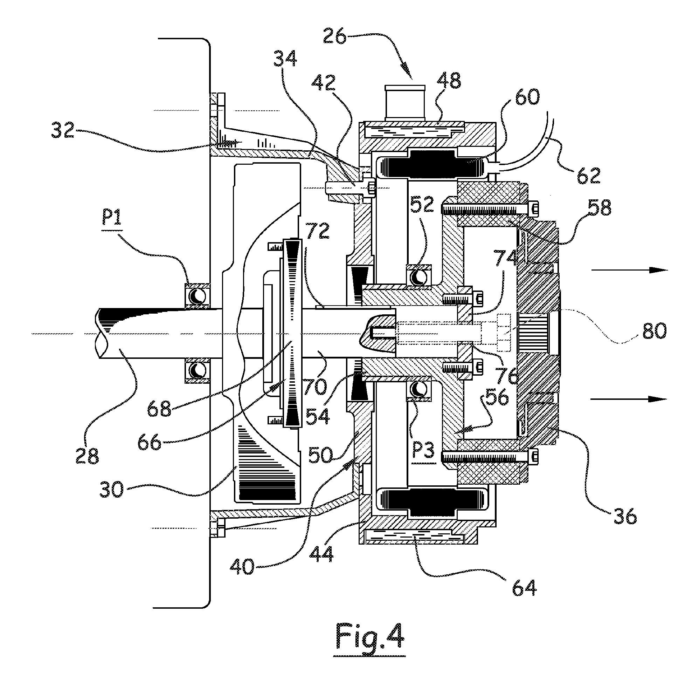

La figure 4 permet de constater qu'il est aisé de retirer la partie rotor R, à savoir le moyeu avec son disque portant les pièces magnétiques 58, hors du carter 40 du dispositif de génération de courant.

Une fois le réducteur/inverseur 20 désaccouplé, une fois le flasque 46 retiré il suffit de démonter la vis 78 pour retirer le rotor R avec son palier incluant le roulement 52.

Souvent, le retrait peut nécessiter un effort important du fait de la clavette 72 et des forces d'attraction magnétique, plusieurs daN pour donner un ordre d'idées.

Dans ce cas, une vis 80 est introduite dans le trou 76 taraudé. Le diamètre étant plus important, la vis 80 prend appui sur l'extrémité de l'axe plein 70 de la pièce de liaison.

Par vissage de la vis 80, l'extraction est rendue aisée.

L'invention couvre aussi une installation de génération de courant comportant le moteur, le dispositif de génération de courant selon l'invention et la transmission mais avec des moyens d'accouplement/désaccouplement de l'entraînement moteur, dénommés embrayage, de façon à bénéficier de toutes les fonctionnalités.

Selon une variante de l'invention, il est possible d'interposer cet embrayage entre l'arbre menant 28 et le dispositif de génération 26 plus particulièrement entre l'arbre menant 28 et la pièce de liaison intermédiaire ou entre la pièce de liaison intermédiaire et le rotor.

De tels moyens peuvent se présenter sous la forme d'un simple crabotage, d'une roue libre ou d'un embrayage centrifuge pour ne citer que ces agencements bien connus en mécanique.

Le but est de solidariser ou de désolidariser en entraînement l'arbre menant 28 et le rotor R.

Ainsi, dans le cas d'un voilier navigant sous voiles, l'hélice peut permettre un entraînement du réducteur/inverseur 20. L'arbre mené 38 devient moteur et entraîne le rotor R permettant la production d'énergie, la perte de vitesse de la structure navigante restant tout à fait acceptable car le couple du dispositif de génération d'énergie électrique est réduit dès que l'inertie mécanique du moteur thermique est supprimée.

De plus, cette faible perte de vitesse n'est généralement pas un critère prépondérant car ce type de voilier très équipé est du type plaisance et non du type compétition.

Dans le cas d'un bateau de croisière fluviale à moteur, il faut prévoir beaucoup d'énergie de service car les occupants sont exigeants et ces croisières se déroulent souvent en famille.

De fait, il existe une forte capacité d'accumulation qui est régulièrement renouvelée car les croisières fluviales se déroulent à faible vitesse mais durant de nombreuses heures.

Ainsi, par exemple pour certaines manoeuvres comme les passages d'écluses généralement longs et nombreux, le moteur thermique est arrêté et une fois désaccouplé, le pilote utilise le dispositif de génération électrique dans le sens inverse comme moteur électrique alimenté par le parc batteries services 16.

La faible durée d'utilisation et la faible puissance nécessaire autorisent un tel usage.

Un tel dispositif de génération d'énergie électrique peut donc être de forte puissance même sur une petite unité, sans dommage pour le ou les moteurs, avec possibilité d'hydro génération et de motorisation électrique moyennant l'interposition d'un embrayage.

Le guidage, outre la sécurité de fonctionnement et la fiabilité apportées, améliore le rendement par l'aménagement et le maintien d'un entrefer réduit.

## Revendications

1. Dispositif (26) de génération de courant électrique et/ou de motorisation dans une structure navigante, interposé entre un bloc moteur (18) comprenant un arbre menant (28) monté sur un palier P1 et un bloc (20) réducteur/inverseur comprenant un arbre mené (38) monté sur un palier P2, **caractérisé en ce que** ce dispositif (26) de génération comprend un carter (40) lié au bloc moteur, un stator S solidaire de ce carter et un rotor R lié à l'arbre menant (28), monté sur un palier P3 ménagé dans ledit carter.

2. Dispositif de génération de courant électrique selon la revendication 1, **caractérisé en ce que** le carter (40) est lié à une cloche (32) standard elle-même solidaire du bloc moteur (18).

3. Dispositif de génération de courant électrique selon la revendication 1 ou 2, **caractérisé en ce que** le rotor R comprend un moyeu avec un arbre creux (54) et un disque (56), ce disque portant des pièces magnétiques (58).

4. Dispositif de génération de courant électrique selon la revendication 3, **caractérisé en ce que** le rotor R est lié à l'arbre menant (28) par une pièce de liaison (66).

5. Dispositif de génération de courant électrique selon la revendication 4, **caractérisé en ce que** la pièce de liaison (66) comprend un disque (68) destiné à être rapporté sur un volant (30) solidaire de l'arbre menant (28) et un axe (70) plein prévu pour recevoir extérieurement l'arbre creux (54) du rotor R, une clavette (72) assurant la liaison en rotation de cet axe plein et de cet arbre creux.

6. Dispositif de génération de courant électrique selon l'une quelconque des revendications précédentes, **caractérisé en ce que** le rotor R comprend un moyeu avec un disque (56) lié à l'arbre mené du bloc (20) réducteur/inverseur par un accouplement (36) élastique.

7. Dispositif de génération de courant électrique selon les revendications 5 et 6, **caractérisé en ce que** le moyeu comprend une platine (74) rapportée sur le disque (56) par vissage, ladite platine (74) comprenant un trou central (76) taraudé, une vis (78) centrale passant librement dans ce trou central (76) taraudé, ladite vis (78) centrale étant vissée dans un taraudage de plus petit diamètre ménagé dans l'axe (70) plein.

8. Dispositif de génération de courant électrique selon l'une quelconque des revendications précédentes, **caractérisé en ce que** le carter (40) porte des enroulements (60) formant le stator S.

9. Installation de génération de courant électrique intégrant un dispositif de génération de courant selon l'une quelconque des revendications précédentes, **caractérisée en ce qu'**elle comprend un embrayage interposé entre l'arbre menant (28) et le dispositif (26) de génération de courant.

10. Installation de génération de courant selon la revendication 9, **caractérisée en ce que** l'embrayage entre l'arbre menant (28) et le dispositif de génération (26) est plus particulièrement interposé entre l'arbre menant (28) et la pièce (66) de liaison intermédiaire ou entre la pièce (66) de liaison intermédiaire et le rotor R.
